# FASCICULE DE BREVET EUROPEEN

(11) **EP 3 227 049 B1**
(45) Date de publication et mention de la délivrance du brevet: **03.11.2021**
(21) Numéro de dépôt: 15804465.1
(22) Date de dépôt: 02.12.2015
(51) Int. Cl.: B23Q 5/10, B23B 29/034, B23Q 1/48

(54) **ÉLECTROBROCHE MUNIE D'UN SYSTÈME ROTATIF DE COMMANDE D'UN OUTIL OU D'UN PORTE-OUTIL**
ELEKTRISCHE SPINDEL MIT EINEM ROTATIONSSYSTEM ZUR STEUERUNG EINES WERKZEUGS ODER EINER WERKZEUGHALTERUNG
ELECTRIC SPINDLE EQUIPPED WITH A ROTARY SYSTEM FOR CONTROLLING A TOOL OR A TOOL HOLDER

(30) Priorité: 05.12.2014 FR 1462009
(43) Date de publication de la demande: 11.10.2017
(73) Titulaire: Société de construction d'équipement de mécanisations et de machines SCEMM, 42100 Saint Etienne (FR)
(72) Inventeur: DAUBIZIT, Olivier, 42170 Chambles (FR); MERLIN, Paul, 42100 Saint Etienne (FR)
(74) Mandataire: Germain Maureau
(86) Numéro de dépôt international: PCT/EP2015/078406
(87) Numéro de publication internationale: WO 2016/087544

(56) Documents cités:
- EP-A1- 0 022 569
- EP-A2- 1 264 653
- WO-A1-01/43904
- DE-A1- 19 712 238
- US-A1- 2010 300 713
- None

## Description

La présente invention porte sur une électrobroche munie d'un système rotatif de commande d'un outil ou d'un porte-outil. L'outil ou le porte-outil est de préférence utilisé pour gérer des opérations d'usinage réalisées dans le domaine des véhicules automobiles, telles que notamment le rodage de fûts de carter cylindres, le chariotage pour la réalisation de sièges de soupapes, ou la compensation d'usure.

Afin de commander un mouvement sur un outil d'usinage en rotation, une première solution consiste à utiliser une broche spécifique développée pour l'usinage considéré. L'inconvénient d'une telle solution spécialisée est qu'elle est "mono-tâche" et peut difficilement s'adapter à l'intégration dans un centre d'usinage.

Une autre solution consiste à utiliser un outil muni d'un système électronique qui permet de commander le déplacement d'un chariot embarqué. Toutefois, une telle solution présente l'inconvénient d'être encombrante du fait de la longueur et du poids de l'outil. En outre, la complexité de la solution la rend économiquement onéreuse et peu adaptée à la fabrication en série.

Par ailleurs, le document EP2065126 enseigne l'utilisation d'une électrobroche comportant un moteur additionnel servant à la ventilation de la broche. Un tel moteur n'est toutefois pas adapté à la commande d'un élément intégré de l'outil. EP 1 264 653 A2 montre une électrobroche selon le préambule de la revendication 1.

L'invention vise à remédier efficacement à ces inconvénients en proposant une électrobroche selon la revendication 1.

L'invention permet ainsi, grâce au système rotatif de commande, d'entraîner un mécanisme de l'outil monté sur l'électrobroche. Cet entraînement permet d'animer une fonction de déplacement de l'élément intégré de l'outil pour gérer des usinages, tels que le rodage, le chariotage, la compensation d'usure etc... L'invention permet en outre d'utiliser des électrobroches standards pour intégrer la fonction de commande de l'outil.

Selon une réalisation, ledit arbre d'entraînement est muni à une de ses extrémités d'un entraîneur d'outil apte à s'accoupler rapidement avec un arbre dudit outil ou porte-outil. Cela permet de conserver la fonction préhension automatique de l'outil, cet accouplement fonctionnant "à vide" lorsque l'outil n'est pas équipé de système actif.

Selon une réalisation, ledit arbre d'entraînement est relié par une de ses extrémités à un arbre dudit moteur additionnel par l'intermédiaire d'un système d'accouplement.

Selon une réalisation, ledit arbre d'entraînement et ledit arbre creux sont concentriques l'un par rapport à l'autre.

Selon une réalisation, ledit arbre d'entraînement et ledit entraîneur d'outil sont creux pour une alimentation en liquide de lubrification.

Selon une réalisation, ladite électrobroche comporte en outre un joint muni d'un conduit établissant une mise en communication d'un circuit de lubrification avec le creux de l'arbre d'entraînement muni d'au moins une ouverture pour le passage du liquide de lubrification. Cela permet de conserver une fonction d'alimentation de l'outil en liquide de lubrification.

Selon une réalisation, ledit arbre d'entraînement et ledit entraîneur d'outil sont dimensionnés de manière à être intégrés dans un dispositif de serrage d'outil de l'électrobroche. On évite ainsi d'avoir à modifier la configuration de l'électrobroche.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale de l'électrobroche selon la présente invention sur laquelle est monté un cône d'outil;
La figure 2 est une vue en coupe détaillée de la partie arrière de l'électrobroche de la figure 1 illustrant le positionnement du moteur additionnel du système rotatif de commande de l'élément intégré à l'outil ou au porte-outil;
La figure 3 est une vue en coupe détaillée de la partie avant de l'électrobroche de la figure 1 faisant apparaître l'entraîneur d'outil qui est destiné à coopérer avec un arbre de l'outil ou du porte-outil;
La figure 4 est une vue en coupe détaillée de la partie avant de l'électrobroche de la figure 1 sur laquelle est monté un outil.

Les éléments identiques, similaires, ou analogues conservent la même référence d'une figure à l'autre.

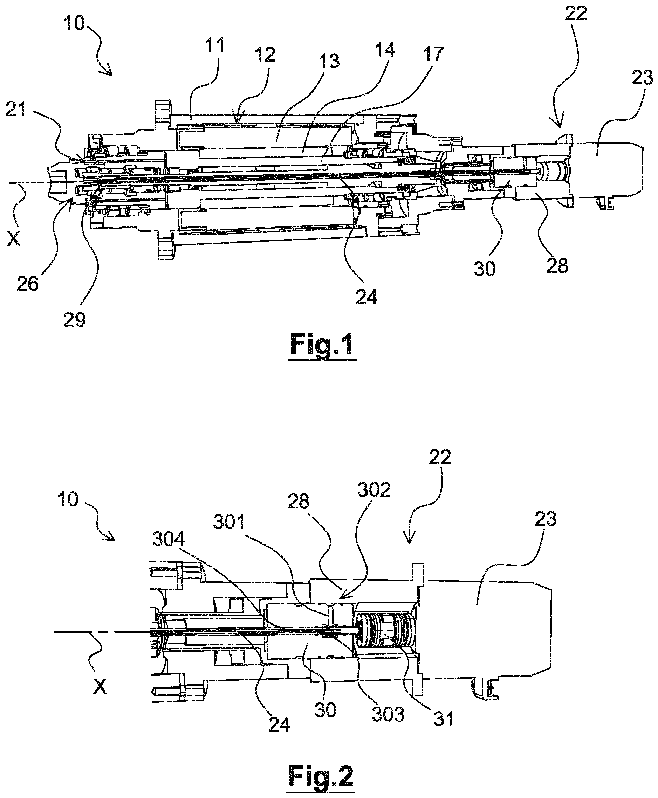

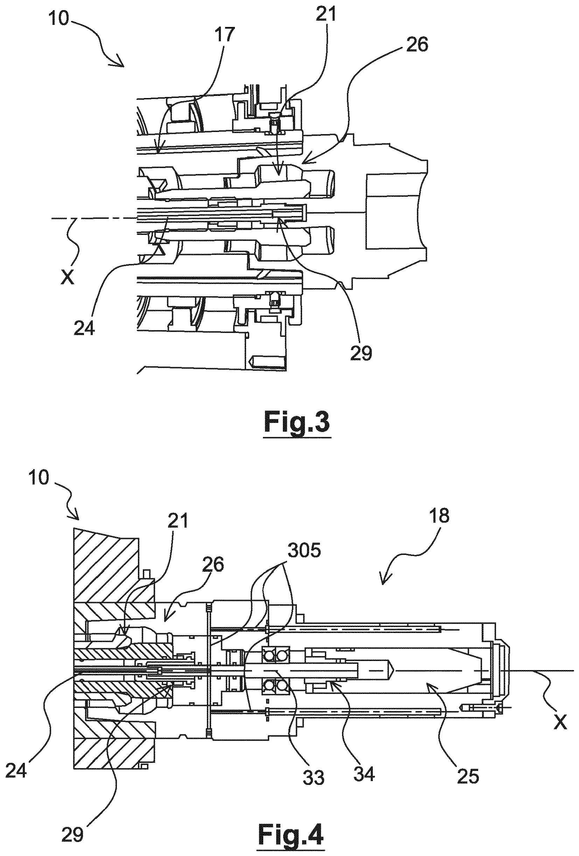

La figure 1 montre une électrobroche 10 selon la présente invention comportant un corps 11 dans lequel est monté un moteur 12 comportant un stator 13 entourant un rotor 14 lié en rotation avec un arbre creux 17 de la broche. Cet arbre creux 17 est destiné à entraîner en rotation un outil ou un porte-outil 18 rapporté (cf. figure 4) lié audit arbre creux 17 par l'intermédiaire d'un dispositif de serrage d'outil 21. Ce dispositif de serrage d'outil 21 classique par exemple de type "HSK" (dit aussi cône-face) coopère en l'occurrence avec un cône d'outil 26.

Dans la suite de la description, afin de faciliter la compréhension, on désignera par "outil" l'élément monté sur l'électrobroche 10 pouvant indifféremment prendre la forme d'un outil ou d'un porte-outil.

Par ailleurs, l'électrobroche 10 comporte un système rotatif de commande 22 d'un déplacement d'un élément intégré 25 à l'outil 18 correspondant à une fonction mécanique additionnelle, telle que la correction d'usure. Le système rotatif de commande 22 comporte un moteur additionnel 23 coaxial avec le moteur 12 ainsi qu'un arbre d'entraînement 24 passant à l'intérieur de l'arbre creux 17 de l'électrobroche 10. Cet arbre d'entraînement 24 est relié d'une part au moteur additionnel 23 et d'autre part à l'outil 18 pour permettre la commande du déplacement de l'élément intégré 25 remplissant la fonction mécanique additionnelle. Le moteur additionnel 23 est de préférence un moteur de type auto-synchrone à aimants permanents.

En l'occurrence, comme cela est bien visible sur la figure 2, le moteur additionnel 23 est monté contre une face radiale extrême d'une cloche 28 de forme sensiblement annulaire, laquelle est assemblée par un de ses bords situé du côté opposé au moteur 23 sur une extrémité arrière du corps 11 de l'électrobroche 10. A cet effet, les vis de montage de l'électrobroche standard sont remplacées par des vis plus longues pour permettre la fixation de la cloche 28. Une telle configuration permet ainsi d'avoir une partie électrique à l'abri de la pollution du fait de son positionnement en dehors de la zone d'usinage.

L'arbre d'entraînement 24 ainsi que l'arbre creux 17 de l'électrobroche 10 sont de préférence concentriques l'un par rapport à l'autre, c'est-à-dire qu'ils ont le même axe X.

Comme on peut le voir sur les figures 3 et 4, l'arbre d'entraînement 24 est muni à une de ses extrémités d'un entraîneur d'outil 29 apte à s'accoupler rapidement avec un arbre 33 de l'outil 18 dont le mouvement de rotation est transformé, via le dispositif 34, à l'intérieur de l'outil pour permettre un entraînement en translation de l'élément intégré 25. L'entraîneur d'outil 29 est par exemple un entraîneur de type 6 pans. L'arbre de l'outil 18 prend de préférence la forme d'une vis à billes ou une vis à rouleau présentant l'avantage d'avoir un jeu quasi nul lors d'un changement de sens de l'arbre 33 de l'outil. L'accouplement avec l'entraîneur d'outil 29 est à "vide" lorsque l'outil 18 n'est pas équipé d'une fonction mécanique additionnelle.

L'arbre d'entraînement 24 est relié par son autre extrémité au moteur additionnel 23. A cet effet, l'arbre d'entraînement 24 est relié à l'arbre du moteur additionnel 23 (non représenté) par l'intermédiaire d'un système d'accouplement 31 (cf. figure 2). Ce système d'accouplement 31 est basé sur l'utilisation deux éléments complémentaires en forme d'étoile coopérant entre eux par l'intermédiaire d'un anneau élastique. Ce système d'accouplement 31 élastique pourra être par exemple un système de type "Rotex" (marque déposée). En variante, l'arbre du moteur 23 et l'arbre d'entraînement 24 sont confondus l'un avec l'autre, l'arbre du moteur additionnel 23 passant alors dans le creux de l'arbre 17 et étant muni à son extrémité de l'entraîneur d'outil 29.

L'arbre d'entraînement 24 et l'entraîneur d'outil 29 sont creux et alimentés en liquide de lubrification, ici de l'huile, ou une émulsion d'huile et d'eau, ou un brouillard d'huile dans le cas d'usinage par micro-lubrification. Cette alimentation en liquide de lubrification est effectuée par l'intermédiaire d'un joint 30 de forme globalement cylindrique qui est fixe par rapport au corps 11 et à l'intérieur duquel peut tourner l'arbre d'entraînement 24.

A cet effet, comme on peut le voir sur la figure 2, le joint tournant 30 comporte un conduit 301 d'orientation radiale établissant une mise en communication d'un circuit de lubrification 302 avec le creux de l'arbre d'entraînement 24. Dans la zone de l'extrémité du conduit 301 débouchant vers l'arbre 24, le joint 30 comporte de préférence un chambrage 303 pour autoriser une accumulation d'huile autour de l'arbre 24. Dans la zone du chambrage 303, l'arbre 24 comprend au moins une ouverture 304 pour permettre à l'huile située dans le chambrage 303 de pénétrer dans le creux de l'arbre 24. L'huile peut alors être amenée jusqu'à l'outil 18 en passant par le creux de l'arbre 24 et par l'entraîneur d'outil 29. L'huile pourra alors circuler dans les canaux classiques 305 de l'outil 18 prévus à cet effet (cf. figure 4). Cela permet de conserver une fonction d'alimentation de l'outil 18 en liquide de lubrification.

En outre, l'arbre d'entraînement 24 et l'entraîneur d'outil 29 sont dimensionnés de manière à être intégrés dans le dispositif de serrage d'outil 21 de l'électrobroche 10. On évite ainsi d'avoir à modifier la configuration d'une électrobroche standard 10.

On décrit ci-après le fonctionnement de l'électrobroche 10 selon la présente invention. En cours de cycle normal, c'est-à-dire lorsque la fonction mécanique de l'outil 18 est désactivée, l'arbre d'entraînement 24 tourne à la même vitesse que l'arbre creux 17 de l'électrobroche 10.

Lors de l'activation de la fonction mécanique pour réaliser une correction d'usure par exemple, la commande génère une rotation angulaire relative entre l'arbre d'entraînement 24 et l'arbre creux 17, dans un sens ou dans l'autre, de façon à actionner, par exemple, le mécanisme dans l'outil 18 muni de l'arbre 33 pour commander le déplacement de l'élément intégré 25. Autrement dit, on obtient ainsi une rotation de l'arbre 33 qui est égale à la différence de rotation des deux moteurs 12 et 23, ce qui permet d'activer la fonction mécanique additionnelle sur cet outil 18.

La transformation de la rotation en mouvement axial via le dispositif 34 est réalisée à l'intérieur de l'outil 18. Ainsi, les efforts générés par la fonction sur l'outil 18 sont rebouclés à l'intérieur de l'outil 18. Par exemple, la transformation en mouvement linéaire d'un couple de 1 Nm avec une vis à bille au pas de 2mm génère en théorie un effort de poussée de 3141N. Si la transformation de mouvement était réalisée dans l'électrobroche 10, une telle poussée viendrait décharger les roulements de l'électrobroche 10.

L'invention est ainsi une solution robuste et à faible coût du fait de sa simplicité mécanique. En outre, l'invention s'adapte aux modèles standards d'électrobroches 10 sur lesquels il est également possible de monter un outil 18 sans fonction mécanique additionnelle intégrée.

L'invention pourra être utilisée sur un centre d'usinage pour réaliser toutes les opérations d'usinage effectuées sur le carter moteur, notamment la compensation d'usure sur l'outil d'alésage cylindre, l'expansion d'outil pour réaliser la finition de l'alésage du cylindre, le rodage des cylindres, ainsi que le rodage de la ligne de vilebrequin.

En variante, la fonction de l'outil 18 pourra ne pas être directement liée à l'usinage, et pourra consister par exemple en une compensation de vibrations dans l'outil 18.

En variante, il serait possible d'opter pour un montage différent des éléments du système rotatif de commande 22 de la figure 2. Par exemple, il est possible d'utiliser un moteur creux pour le moteur 23 et de faire passer l'arbre 24 dans le moteur 23. Le joint tournant 30 peut alors être fixé à l'arrière du moteur 23. Autrement dit, il est possible d'intervertir le montage du moteur additionnel 23 et du joint tournant 30.

## Revendications

1. Electrobroche (10) comportant un corps (11) dans lequel est monté un moteur (12), ledit moteur (12) comportant un stator (13) entourant un rotor (14) lié en rotation avec un arbre creux (17), ledit arbre creux (17) étant destiné à entraîner en rotation un outil ou un porte-outil (18), l'électrobroche (10) comportant en outre un système rotatif de commande (22) d'un déplacement d'un élément intégré (25) audit outil ou porte-outil (18), ledit système rotatif de commande (22) comportant un moteur additionnel (23) ainsi qu'un arbre d'entraînement (24) passant à l'intérieur dudit arbre creux (17) de ladite électrobroche (10), ledit arbre d'entraînement (24) étant relié d'une part audit moteur additionnel (23) et d'autre part audit outil ou porte-outil (18) pour permettre la commande du déplacement dudit élément intégré (25) en générant une rotation angulaire relative entre l'arbre d'entraînement (24) et l'arbre creux (17), **caractérisée en ce que**, ledit moteur additionnel (23) est monté sur une cloche (28) laquelle est assemblée sur une extrémité arrière dudit corps (1 1 ) de ladite électrobroche (10), le déplacement de l'élément intégré (25) étant axial, la transformation du mouvement de rotation de l'arbre (33) est réalisé à l'intérieur de l'outil (18) via un dispositif (34).

2. Electrobroche selon la revendication 1 , **caractérisée en ce que** ledit arbre d'entraînement (24) est muni à une de ses extrémités d'un entraîneur d'outil (29) apte à s'accoupler rapidement avec un arbre (33) dudit outil ou porte-outil (18).

3. Electrobroche selon la revendication 1 ou 2, **caractérisée en ce que** ledit arbre d'entraînement (24) est relié par une de ses extrémités à un arbre dudit moteur additionnel (23) par l'intermédiaire d'un système d'accouplement (31 ).

4. Electrobroche selon l'une quelconque des revendications 1 à 3, **caractérisée en ce que** ledit arbre d'entraînement (24) et ledit arbre creux (17) sont concentriques l'un par rapport à l'autre.

5. Electrobroche selon la revendication 2, **caractérisée en ce que** ledit arbre d'entraînement (24) et ledit entraîneur d'outil (29) sont creux pour une alimentation en liquide de lubrification.

6. Electrobroche selon la revendication 5, **caractérisée en ce qu'**elle comporte en outre un joint (30) muni d'un conduit (301 ) établissant une mise en communication d'un circuit de lubrification (302) avec le creux de l'arbre d'entraînement (24) muni d'au moins une ouverture (304) pour le passage du liquide de lubrification.

7. Electrobroche selon l'une quelconque des revendications 1 à 6, **caractérisée en ce que** ledit arbre d'entraînement (24) et ledit entraîneur d'outil (29) sont dimensionnés de manière à être intégrés dans un dispositif de serrage d'outil (21 ) de l'électrobroche (10).

## Patentansprüche

1. Elektrische Spindel (10), die ein Gehäuse (11) beinhaltet, in dem ein Motor (12) verbaut ist, wobei der Motor (12) einen Stator (13) beinhaltet, der einen Rotor (14) umgibt, der mit einer Hohlwelle (17) drehverbunden ist, wobei die Hohlwelle (17) dazu bestimmt ist, ein Werkzeug oder einen Werkzeughalter (18) in Drehung anzutreiben, wobei die elektrische Spindel (10) weiter ein Drehsystem zum Steuern (22) einer Verschiebung eines im Werkzeug oder Werkzeughalter (18) integrierten Elements (25) beinhaltet, wobei das Drehsystem zum Steuern (22) einen zusätzlichen Motor (23), sowie eine Antriebswelle (24) beinhaltet, die im Inneren der Hohlwelle (17) der elektrischen Spindel (10) verläuft, wobei die Antriebswelle (24) einerseits mit dem zusätzlichen Motor (23), und andererseits mit dem Werkzeug oder Werkzeughalter (18) verbunden ist, um die Steuerung der Verschiebung des integrierten Elements (25) durch Erzeugen einer relativen Winkeldrehung zwischen der Antriebswelle (24) und der Hohlwelle (17) zu erlauben, **dadurch gekennzeichnet, dass** der zusätzliche Motor (23) auf einer Glocke (28) angebracht ist, welche an einem hinteren Ende des Gehäuses (11) der elektrischen Spindel (10) aufgebaut ist, wobei die Verschiebung des integrierten Elements (25) axial verläuft, die Umwandlung der Drehbewegung der Welle (33) im Inneren des Werkzeugs (18) anhand einer Vorrichtung (34) erfolgt.

2. Elektrische Spindel nach Anspruch 1, **dadurch gekennzeichnet, dass** die Antriebswelle (24) an einem ihrer Enden mit einem Werkzeugantreiber (29) versehen ist, der imstande ist, sich rasch mit einer Welle (33) des Werkzeugs oder Werkzeughalters (18) zu koppeln.

3. Elektrische Spindel nach Anspruch 1 oder 2, **dadurch gekennzeichnet, dass** die Antriebswelle (24) durch eines ihrer Enden anhand eines Kopplungssystems (31) mit einer Welle des zusätzlichen Motors (23) verbunden ist.

4. Elektrische Spindel nach einem der Ansprüche 1 bis 3, **dadurch gekennzeichnet, dass** die Antriebswelle (24) und die Hohlwelle (17) in Bezug zueinander konzentrisch sind.

5. Elektrische Spindel nach Anspruch 2, **dadurch gekennzeichnet, dass** die Antriebswelle (24) und der Werkzeugantreiber (29) für eine Versorgung mit Schmierflüssigkeit hohl sind.

6. Elektrische Spindel nach Anspruch 5, **dadurch gekennzeichnet, dass** sie weiter eine Dichtung (30) beinhaltet, die mit einer Leitung (301) versehen ist, die einen Anbindungsaufbau eines Schmierkreises (302) mit dem Hohlraum der Antriebswelle (24) erstellt, der mit mindestens einer Öffnung (304) für den Verlauf der Schmierflüssigkeit versehen ist.

7. Elektrische Spindel nach einem der Ansprüche 1 bis 6, **dadurch gekennzeichnet, dass** die Antriebswelle (24) und der Werkzeugantreiber (29) derart bemessen sind, um in eine Werkzeugspannvorrichtung (21) der elektrischen Spindel (10) integriert zu werden.

## Claims

1. An electro-spindle (10) including a body (11) in which a motor (12) is mounted, said motor (12) including a stator (13) surrounding a rotor (14) rotatably connected with a hollow shaft (17), said hollow shaft (17) being intended to rotatably drive a tool or a tool holder (18), the electro-spindle (10) further including a rotary system (22) for controlling a displacement of an element (25) incorporated to said tool or tool holder (18), said rotary control system (22) including an additional motor (23) as well as a drive shaft (24) passing inside said hollow shaft (17) of said electro-spindle (10), said drive shaft (24) being connected on the one hand to said additional motor (23) and on the other hand to said tool or tool holder (18) to allow control of the displacement of said incorporated element (25) by generating a relative angular rotation between the drive shaft (24) and the hollow shaft (17), **characterized in that**, said additional motor (23) is mounted on a bell (28) which is assembled on a rear end of said body (11) of said electro-spindle (10), the displacement of the incorporated element (25) being axial, the transformation of the rotational movement of the shaft (33) is performed inside the tool (18) via a device (34).

2. The electro-spindle according to claim 1, **characterized in that** said drive shaft (24) is provided at one of its ends with a tool driver (29) capable of rapidly coupling with a shaft (33) of said tool or tool holder (18).

3. The electro-spindle according to claim 1 or 2, **characterized in that** said drive shaft (24) is connected by one of its ends to a shaft of said additional motor (23) via a coupling system (31).

4. The electro-spindle according to any one of claims 1 to 3, **characterized in that** said drive shaft (24) and said hollow shaft (17) are concentric with respect to one another.

5. The electro-spindle according to claim 2, **characterized in that** said drive shaft (24) and said tool driver (29) are hollow for a lubricating liquid supply.

6. The electro-spindle according to claim 5, **characterized in that** it further includes a seal (30) provided with a conduit (301) establishing a communication of a lubrication circuit (302) with the recess of the drive shaft (24) provided with at least one opening (304) for the passage of the lubricating liquid.

7. The electro-spindle according to any one of claims 1 to 6, **characterized in that** said drive shaft (24) and said tool driver (29) are sized so as to be incorporated into a tool clamping device (21) of the electro-spindle (10).
